Europäisches Patentamt

(19) European Patent Office

Office européen des brevets

(11) Publication number: **0 044 838**
**B1**

(12) **EUROPEAN PATENT SPECIFICATION**

(45) Date of publication of patent specification: **03.07.85**

(21) Application number: **80902131.4**

(22) Date of filing: **31.10.80**

(86) International application number:
**PCT/SE80/00269**

(87) International publication number:
**WO 81/01307 14.05.81 Gazette 81/12**

(51) Int. Cl.⁴: **E 04 F 19/04, H 02 G 3/04**

(54) **EDGING, PREFERABLY A SKIRTING-BOARD.**

(30) Priority: **01.11.79 SE 7909058**

(43) Date of publication of application:
**03.02.82 Bulletin 82/05**

(45) Publication of the grant of the patent:
**03.07.85 Bulletin 85/27**

(84) Designated Contracting States:
**AT CH DE FR GB LI LU NL**

(56) References cited:
**FR-A- 977 878**
**FR-A-1 346 593**
**FR-A-1 463 382**

(73) Proprietor: **RS-REKLAM**
**Kamrersvägen 15**
**S-237 00 Bjärred (SE)**

(72) Inventor: **SANDSTRÖM, Rolf Ingemar**
**Slattervägen 1 E**
**S-22238 Lund (SE)**

(74) Representative: **Eriksson, Hans Gustaf**
**Patentfirman Hans G. Eriksson HB Box 50**
**S-640 24 Sköldinge (SE)**

Courier Press, Leamington Spa, England.

## Description

The present invention relates to a combination of an edging, preferably a skirting-board, comprising at least one longitudinal groove (2, 3) provided in the external flat side of the edging, with a flex (4, 5) of an electrical appliance being insertable in that groove over an arbitrary length of the edging.

From FR—A—1346593 and from FR—A—977878 there are known edgings which have to consist of an elastic material, as the circular grooves are accessible only by small slots which have to be enlarged when the flex is inserted. Such enlargement relies on the elasticity of the material of the edging.

By contrast, the invention provides to keep the flex in position by a light press fit. As the grooves have parallel upper and lower surfaces, the flex is directly insertable in or detachable from them.

Accordingly, the invention consists in that the groove (2, 3) has parallel upper and lower boundary surfaces and is so dimensioned in relation to the flex (4, 5) received therein, that said flex is kept in position in the groove with a light press fit.

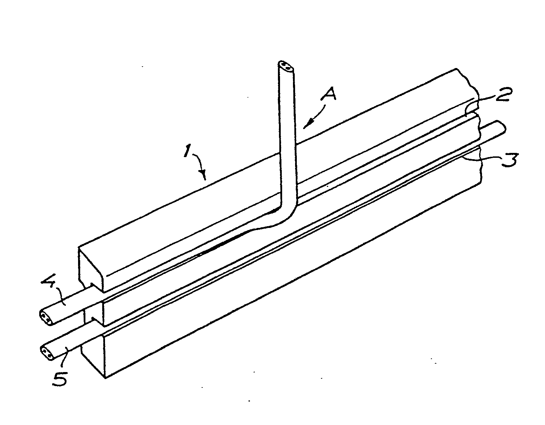

The invention will now be described with reference to an illustrative embodiment, the figure illustrating a skirting-board in a perspective view, with flexes inserted in its grooves.

The skirting-board 1 is shown with two grooves 2 and 3, having flexes 4 and 5 inserted therein. The upper flex 4 is deflected from the groove 2 at A, while the flex 5 is shown inserted in the groove 3 for deflection to a plug or an electrical apparatus not shown.

The groove may also have a depth exceeding its width, which means that on deflecting a flex, the width of which exceeds its thickness, the flex is firmly gripped as a result of the flex tending to twist in the groove.

## Claim

A combination of an edging, preferably a skirting-board, comprising at least one longitudinal groove (2, 3) provided in the external flat side of the edging, with a flex (4, 5) of an electrical appliance being insertable in that groove over an arbitrary length of the edging, characterized in that the groove (2, 3) has parallel upper and lower boundary surfaces and is so dimensioned in relation to the flex (4, 5) received therein, that said flex is kept in position in the groove with a light press fit.

## Revendication

Une combinaison d'une bordure, de préférence plinthe, comportant au moins une rainure longitudinale (2, 3) disposée dans la partie plate extérieure de la bordure, avec un fil électrique souple (4, 5) d'un appareil électrique, ledit fil électrique étant insérable dans ladite rainure sur une longueur facultative de la bordure, caractérisé en ce que la rainure (2, 3) a des faces limites supérieures et inférieures disposées en parallèle et que la rainure est dimensionnée par rapport au fil électrique (4, 5) y introduit de telle manière que ledit fil électrique est tenu en position dans la rainure par un adjustement serré léger.

## Patentanspruch

Die Kombination einer Einfassung, vorzugsweise Fussbodenleiste, bestehend aus mindestens einer in der äusseren flachen Seite der Einfassung angeordneten Längsrille (2, 3), und einer Litze (4, 5) eines elektrischen Geräts, welche in die vorerwähnte Rille über eine beliebige Länge der Einfassung einfügbar ist, dadurch gekennzeichnet, dass die Rille (2, 3) parallele obere und untere Grenzflächen aufweist und im Verhältnis zu der darin eingesetzte Litze (4, 5) derart dimensioniert ist, dass die genannte Litze durch einen leichten Press-Sitz am Platze in der Rille gehalten wird.

0 044 838

1